# EUROPEAN PATENT SPECIFICATION

(11) **EP 1 870 296 B1**
(45) Date of publication and mention of the grant of the patent: **22.04.2009**
(21) Application number: 07110268.5
(22) Date of filing: 14.06.2007
(51) Int. Cl.: B60R 21/015

(54) **Vehicle seat detecting system, operation device controlling system, and vehicle**
Fahrzeugsitzerfassungssystem, Steuersystem für eine Betriebsvorrichtung und Fahrzeug
Système de détection de siège de véhicule, système de contrôle d'un dispositif fonctionnel, et véhicule

(30) Priority: 20.06.2006 JP 2006170124
(43) Date of publication of application: 26.12.2007
(73) Proprietor: TAKATA CORPORATION, Minato-ku, Tokyo 106-8510 (JP)
(72) Inventor: Aoki, Hiroshi, Tokyo 106-8510 (JP); Yokoo, Masato, Tokyo 106-8510 (JP); Hakomori, Yuu, Tokyo 106-8510 (JP)
(74) Representative: Banzer, Hans-Jörg

(56) References cited:
- EP-A- 1 674 347
- WO-A-01/19648
- WO-A-02/49882
- DE-A1- 19 648 268
- DE-C1- 19 905 363
- US-B1- 6 393 133

## Description

### Technical Field of the Invention

The present invention relates to an object detecting technology which is adapted to a vehicle and, more particularly, to a technology for developing a detecting system of detecting information about a vehicle seat.

### Background of the Invention

Conventionally, there are known various technologies for detecting information about an object occupying a vehicle seat by using a photographing means such as a camera. For example, disclosed in JP-A-2003-294855 as listed below is a configuration of an occupant detecting apparatus in which a camera arranged in front of a vehicle occupant is used to detect the position of the vehicle occupant sitting in a vehicle seat.

WO 02/49882 A2, which serves as basis for the preamble of claim 1, relates to a method and device for detecting an object in a vehicle, in which a camera captures an image including distance information, the image data are processed and positions of parts of a vehicle seat are then determined based on the known dimensions of the vehicle seat.

EP 1 674 347 A1, which is prior art pursuant to Art. 54(3) EPC, discloses a detection system and occupant protection device employing the same, in which a camera captures position coordinates of a three-dimensional surface profile, which is then segmented into pixels of a three-dimensional lattice and transformed into a vehicle body coordinate system. The system includes a seat back inclination detector which detects inclination information based on the position of a plurality of points on edges of the seat back.

WO 01/19648 A1 discloses a method and device for controlling the operation of an occupant-protection system, in which a camera captures three-dimensional surface image data of an unoccupied seat and of a seat occupied by an object, respectively, and determines a volume of the object based on a difference of the surface image data. Data on the surface of the unoccupied seat may also be generated from one set of surface image data of the unoccupied seat based on a known inclination and displacement of the seat.

US 6,393,133 B1 discloses a system for controlling a vehicular system based on occupancy of the vehicle which uses optical transmitters or ultrasonic transducers for determining the presence or absence of vehicle occupants.

### Disclosure of the Invention

### Problems to be solved by the Invention

By the way, there is a demand for technology for detecting the positional conditions of a vehicle seat using an occupant detecting apparatus as disclosed in the aforementioned JP-A-2003-294855. By detecting the positional conditions of the vehicle seat, it is possible to obtain information such as the anteroposterior position of the vehicle seat, the inclination angle of the seat back, and the height of the seat cushion and it is also possible to determine the state of a vehicle occupant who closely fits the vehicle seat, for example. However, since the front surface of the vehicle seat is covered by the vehicle occupant sitting in the seat, it is difficult to precisely detect the whole vehicle seat by using a photographing means such as a camera.

The present invention is made in view of the aforementioned point and it is an object of the present invention to provide a technology, relating to a detecting system to be installed in a vehicle, which is effective for precisely detecting the positional conditions of a vehicle seat.

### Means to solve the Problems

According to the invention, this object is achieved by a vehicle seat detecting system as defined in claim 1, an operation device controlling system as defined in claim 4, and a vehicle as defined in claim 5. The dependent claims define preferred and advantageous embodiments of the invention.

For achieving the object, the present invention is configured. Though the present invention is typically adapted to a detecting system in an automobile for detecting information about a vehicle seat, the present invention can be also adapted to a technology for developing a detecting system in a vehicle other than the automobile for detecting information about a vehicle seat.

A vehicle seat detecting system of the invention comprises at least a three-dimensional surface profile detecting means, a digitizing means, and a processing means.

The three-dimensional surface profile detecting means of this invention is structured as a means having a function of detecting a three-dimensional surface profile of a vehicle seat from a single view point. This structure may be achieved by installing a 3D camera, capable of detecting a three-dimensional surface profile, inside a vehicle cabin. The "single view point" used here means a style where the number of installation places of the camera is one, that is, a single camera is mounted at a single place. As the camera capable of taking images from a single view point, a 3-D type monocular C-MOS camera or a 3-D type pantoscopic stereo camera may be employed. Since all that's required by the present invention is the installation of a single camera which is focused on the vehicle seat with regard to the "single view point", the present invention does not avoid the installation of another camera or another view point for another purpose. Since the object to be detected by the three-dimensional surface profile detecting means of this invention includes at least the vehicle seat, a vehicle occupant or an article occupying the vehicle seat can be also detected together with the detection of the vehicle seat.

The digitizing means of this invention is structured as a means having a function of digitizing the three-dimensional surface profile detected by the three-dimensional surface profile detecting means into a numerical coordinate system. The three-dimensional surface profile of the vehicle seat from the single view point detected by the three-dimensional surface profile detecting means is digitized into a numerical coordinate system.

The processing means of this invention is structured as a means having a function of deriving information about a seat back shoulder region among respective regions of the vehicle seat based on the numerical coordinate system of the three-dimensional surface profile digitized by the digitizing means. The "seat back shoulder region" used here is defined as a region about a shoulder of the seat back, i.e. including a portion extending from a side edge to an upper edge and peripheral portions of the seat back. The "information about the seat back shoulder region" may include information about the position and the inclination angle of the seat back shoulder region. Among respective regions of the vehicle seat, the seat back is closely related to the positional conditions of the driver's seat. Consequently, the position and the inclination angle of the seat back shoulder region can be used as reference for obtaining the position and the inclination angle of the whole seat back. By using the seat back shoulder region as reference, the position of the seat back, the anteroposterior position of the seat, and the height of the seat cushion can be obtained. In addition, among respective regions of the seat back, especially the seat back shoulder region is allowed to be detected easily by the three-dimensional surface profile without being disturbed by a vehicle occupant. When at least information about (position, inclination angle etc.) the seat back shoulder region as a region of the vehicle seat is derived, the positional conditions of the vehicle seat such as the inclination angle of the seat back, the anteroposterior position of the seat, and the height of the seat cushion of the vehicle seat can be precisely determined even though the whole vehicle seat is not detected.

According to the aforementioned arrangement of the vehicle seat detecting system of the invention, the positional conditions of the vehicle seat can be precisely detected by deriving information about the seat back shoulder region.

According to the invention, the vehicle seat detecting system of the invention comprises a storing means. The storing means is structured as a means for storing plural kinds of positional information of the seat back shoulder region. The "plural kinds of positional information of the seat back shoulder region" used here may be information about configurations of the seat back shoulder region, each representing a different position or inclination angle of the seat back shoulder region. The processing means is structured to derive information, mostly matching the information detected by the three-dimensional surface profile detecting means, as the information about the seat back shoulder region from the plural kinds of positional information previously stored in the storing means.

According to the vehicle seat detecting system of the invention, the positional conditions of the vehicle seat can be precisely detected by deriving information about the seat back shoulder region using the previously stored positional information of the seat back shoulder region. By increasing the number of positional information of the seat back shoulder region previously stored in the storing means, the detection precision in detecting the positional conditions of the vehicle seat can be increased.

According to an embodiment of the invention, in the numerical coordinate system of the three-dimensional surface profile digitized by the digitizing means, the processing means scans a plurality of points along a vertical direction on the back side of a seat back side edge by scanning beams from the rear to the front of the vehicle and derives information about the seat back shoulder region based on the information about the plurality of points of the seat back side edge detected by the scanning. The "seat back side edge" used here is defined as a region along a side edge among respective regions of the seat back. In case of scanning the back side of the seat back side edge in the vertical direction, only the back of the seat back is continuously detected without detecting the head rest. In this case, it can be determined that the uppermost detected point which is positioned at the top among the detected points corresponds to a position of the seat back shoulder region. The inclination angle of the back of the seat back corresponds to the inclination angle of the seat back shoulder region.

According to the vehicle seat detecting system of this embodiment, the positional conditions of the vehicle seat can be precisely detected by deriving information about the seat back shoulder region using the scanning beams from the rear to the front of the vehicle.

According to an embodiment of the invention, the processing means is structured to conduct a process for determining the positional conditions of the vehicle seat based on the derived information about the seat back shoulder region. By the processing means, the positional conditions of the vehicle seat are determined. The "positional conditions of the vehicle seat" widely include the position and the attitude of the vehicle seat (a driver's seat, a front passenger seat, a rear seat) and generally include the height of the seat cushion, the inclination angle of the seat back, and the anteroposterior position of the seat of the vehicle seat. In the processing means of this invention, the process of deriving information about the seat back shoulder region, the process of determining the positional conditions of the vehicle seat may be conducted by a single processing unit or may be conducted by separate processing units.

According to the vehicle seat detecting system of this embodiment, a system capable of deriving information about the seat back shoulder region and precisely determining the positional conditions of the vehicle seat from the derived information can be constructed.

An operation device controlling system of the invention comprises at least a vehicle seat detecting system as mentioned above, an operation device, and an actuation control means.

The operation device of this invention is actuated based on the positional conditions of the vehicle seat determined by the processing means of the vehicle seat detecting system and is controlled its actuation by the actuation control means. As the operation device, an arrangement for informing of the information about the vehicle seat itself, an arrangement for producing an alarm indicating that the positional condition of the vehicle seat is out of the standard range according to the detected information, an arrangement for determining the position, the body size, and movement of the vehicle occupant from the detected information and then changing the mode of occupant restraint by an airbag and/or a seat belt according to the information of the determination may be employed.

Therefore, according to the structure of the operation device controlling system of the invention, the actuation of the operation device can be controlled in a suitable mode according to the results of the determination of the vehicle seat detecting system, thereby enabling detailed control for the operation device.

A vehicle of the invention comprises at least: an engine/running system; an electrical system; an actuation control device; and a vehicle seat detecting means. The engine/running system is a system involving an engine and a running mechanism of the vehicle. The electrical system is a system involving electrical parts used in the vehicle. The actuation control device is a device having a function of conducting the actuation control of the engine/running system and the electrical system. The vehicle seat detecting means is structured as a means for detecting positional conditions of a vehicle seat. In this invention, the vehicle seat detecting means comprises a vehicle seat detecting system as mentioned above.

According to this arrangement, there is provided a vehicle mounted with a vehicle seat detecting system capable of precisely detecting the positional conditions of the vehicle seat.

### Effects of the Invention

As described in the above, according to the present invention, information about a seat back shoulder region among respective regions of a vehicle seat is derived by using an arrangement for detecting three-dimensional surface profile of the vehicle seat from a single view point, thereby enabling precise detection of the positional conditions of the vehicle seat.

### Brief Explanation of the drawings

Fig. 1 is an illustration showing a system structure of a vehicle seat detecting system 100, which is installed in a vehicle, according to an embodiment.
Fig. 2 is a perspective view showing a vehicle cabin taken from a camera 112 side of the embodiment.
Fig. 3 is a flow chart of "vehicle seat detection process" for detecting information about a driver's seat in the vehicle seat detecting system 100 of the embodiment.
Fig. 4 is an illustration showing an aspect of pixel segmentation in the embodiment.
Fig. 5 is an illustration showing a segmentation-processed image C1 of the embodiment.
Fig. 6 is an illustration showing some examples of a plurality of configurations of a seat back shoulder region which are previously stored in a storing section 152 of a storing means 150 of the embodiment.
Fig. 7 is an illustration showing the inclination angle θ of the seat back 14, the center position A of the seat back shoulder region 14a, and the like of the embodiment.
Fig. 8 is an illustration showing a case that a back side of a seat back side edge 14b is scanned at a plurality of points along the vertical direction by a plurality of scanning beams M from the rear to the front of the vehicle according to the segmentation-processed image C 1 obtained at step S103 for the vehicle seat detecting process of the embodiment.
Fig. 9 is an illustration showing, taken from above the driver's seat 12, a scanning range 15 using the scanning beams M shown in Fig. 8.

### Best Modes for carrying out the Invention

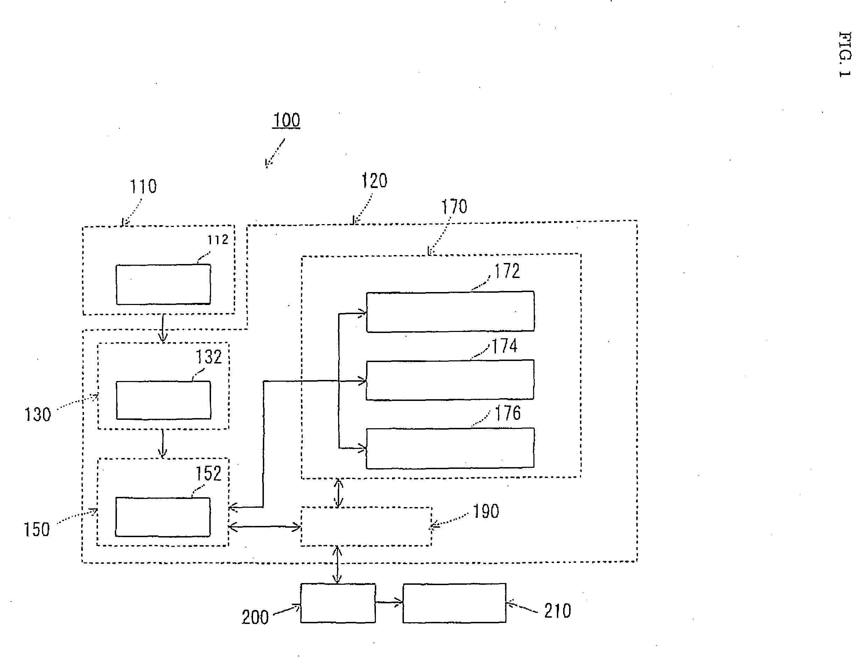

Hereinafter, description will be made as regard to embodiments of the present invention with reference to drawings. First, a vehicle seat detecting system 100 as an embodiment of the "vehicle seat detecting system (vehicle seat detecting means)" according to the present invention will be described with reference to Fig. 1 through Fig. 7.

The structure of the vehicle seat detecting system 100, which is installed in a vehicle, of this embodiment is shown in Fig. 1.

The vehicle seat detecting system 100 of this embodiment is installed in an automobile as the "vehicle" of the present invention for detecting at least information about a vehicle seat. As shown in Fig. 1, the vehicle seat detecting system 100 mainly comprises a photographing means 110 and a control means 120.

Further, the vehicle seat detecting system 100 cooperates together with an ECU 200 as an actuation control device for the vehicle and an operation device 210 to compose the "operation device controlling system" of the present invention. The vehicle comprises, but not shown, an engine/running system involving an engine and a running mechanism of the vehicle, an electrical system involving electrical parts used in the vehicle, and an actuation control device (ECU 200) for conducting the actuation control of the engine/running system and the electrical system.

The photographing means 110 of this embodiment comprises a camera 112 as the photographing device and a data transfer circuit (not shown). The camera 112 is a 3-D (three-dimensional) camera (sometimes called "monitor") of a C-MOS or CCD (charge-coupled device) type in which light sensors are arranged into an array (lattice) arrangement. The camera 112 comprises an optical lens and a distance measuring image chip such as a CCD (charge-coupled device) or C-MOS chip, but not especially shown. Light incident on the distance measuring image chip through the optical lens is focused on a focusing area of the distance measuring image chip 116. With respect to the camera 112, a light source for emitting light to an object may be suitably arranged. By the camera 112 having the aforementioned structure, information about distance relative to the object is measured a plurality of times to detect a three-dimensional surface profile which is used to identify the presence or absence, the size, the position, the attitude, and the movement of the object. Therefore, the photographing means 110 composes the "three-dimensional surface profile detecting means" for detecting the three-dimensional surface profile of a vehicle seat as the object in the present invention.

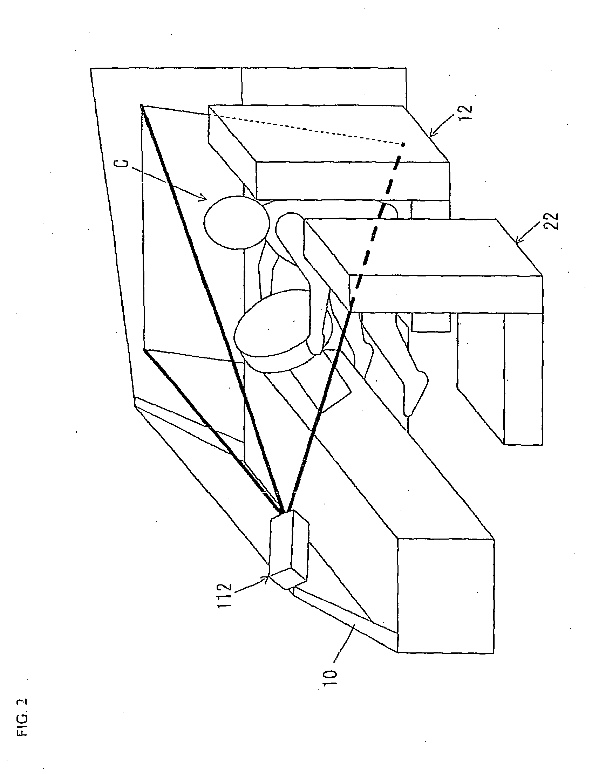

The camera 112 having the aforementioned structure is mounted, in a embedding manner, on an instrument panel in a frontward portion of the vehicle, an area around an A-pillar, or an area around a windshield of the automobile in such a manner as to face one or a plurality of vehicle seats. As an installation example of the camera 112, a perspective view of a vehicle cabin taken from a side of the camera 112 of this embodiment is shown in Fig. 2. As shown in Fig. 2, the camera 112 is disposed at an upper portion of an A-pillar 10 on a side of a front passenger seat 22 to be directed in a direction capable of photographing an occupant C on a driver's seat 12 to take an image with the occupant C positioned on the center thereof. The camera 112 is set to start its photographing operation, for example, when an ignition key is turned ON or when a seat sensor (not shown) installed in the driver seat detects a vehicle occupant sitting in the driver seat.

The control means 120 of this embodiment further comprises at least a digitizing means 130, a storing means 150, a computing means (MPU) 170, an input/output means 190, and peripheral devices (not shown).

The digitizing means 130 comprises an image processing section 132 which conducts camera control for controlling the camera to obtain good quality images and image processing control for processing images taken by the camera 112 to be used for analysis. Specifically, as for the control of the camera, the adjustment of the frame rate, the shutter speed, and the sensitivity, and the accuracy correction are conducted to control the dynamic range, the brightness, and the white balance. As for the image processing control, the spin compensation for image, the correction for distortion of the lens, the filtering operation, and the difference operation as image preprocessing operations are conducted and the configuration determination and the trucking as image recognition processing operations are conducted. The digitizing means 130 also performs a process for digitizing a three-dimensional surface profile detected by the camera 112 into a numerical coordinate system. The digitizing means 130 corresponds to the "digitizing means for digitizing the three-dimensional surface profile detected by the three-dimensional surface profile detecting means into a numerical coordinate system" of the present invention. Information obtained by the digitizing means 130 is stored in a storing section 152 of the storing means 150 once and is read out from the storing section 152 each time for the computing process by the computing means 170.

The storing means 150 comprises the storing section 152 and is a means for storing (recording) data for correction, buffer frame memory for preprocessing, defined data for recognition computing, reference patterns, the image processing results of the image processing section 132 of the digitizing means 130, and the computed results of the computing means 170 as well as an operation control software. The storing means 150 of this embodiment previously stores a plurality of configurations of a shoulder region of a seat back, each representing a different inclination angle of the seat back shifted from the next one by a predetermined angle, that is, positional information of the seat back shoulder region and angular information of the seat back in a plurality of positional conditions of the shoulder region of the seat back, as will be described in detail. The stored information is used in "pattern matching" as will be described later. The storing means 150 (the storing section 152) corresponds to the "storing means for storing plural kinds of positional information of the seat back shoulder region" of the present invention.

The computing means 170 of this embodiment is a means for extracting information about the vehicle seat (the driver's seat 12 in Fig. 2) as a object based on the information obtained by the process of the image processing section 132 and comprises at least a seat cushion height detecting section 172, a seat back inclination detecting section 174, and a seat anteroposterior position detecting section 176. The seat cushion height detecting section 172 has a function of detecting the height of the seat cushion of the driver's seat 12. The seat back inclination detecting section 174 has a function of detecting the inclination of the seat back of the driver's seat 12. The seat anteroposterior position detecting section 176 has a function of detecting information about the anteroposterior position of the driver's seat 12. The computing means 170 has a function of deriving information about the seat back shoulder region among respective regions of the vehicle seat and a function of determining the positional conditions of the vehicle seat. The computing means 170 composes the "processing means" of the present invention.

The input/output means 190 inputs information about the vehicle, information about traffic conditions around the vehicle, information about weather condition and about time zone, and the like to the ECU 200 for conducting controls of the whole vehicle and outputs recognition results. As the information about the vehicle, there are, for example, the state (open or closed) of a vehicle door, the wearing state of the seat belt, the operation of brakes, the vehicle speed, and the steering angle. In this embodiment, based on the information outputted from the input/output means 190, the ECU 200 outputs actuation control signals to the operation device 210 as an object to be operated. The operation device 210 corresponds to the "operation device" of the present invention. The ECU 200 for controlling the actuation of the operation device 210 corresponds to the "actuation control means" of the present invention. As concrete examples of the operation device 210, there are an occupant restraining device for restraining an occupant by an airbag and/or a seat belt and a device for outputting warning or alarm signals (display, sound and so on), and the like.

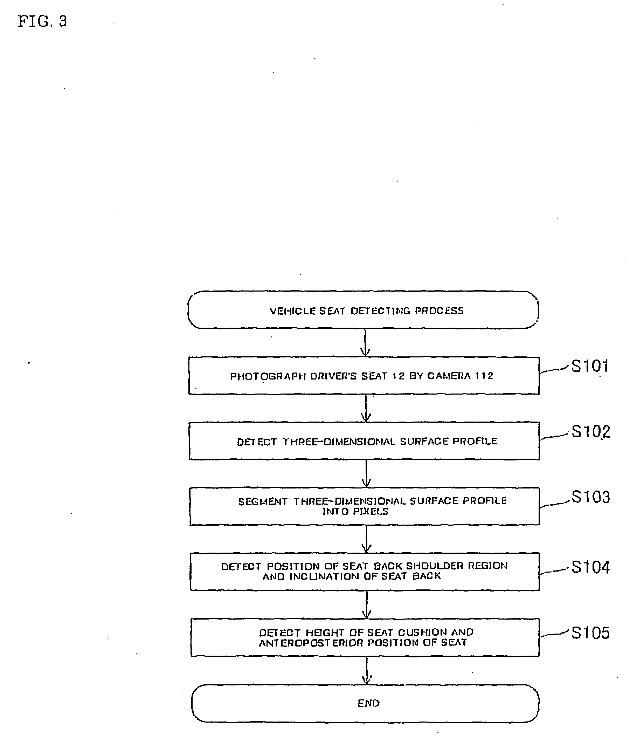

Hereinafter, the action of the vehicle seat detecting system 100 having the aforementioned structure will be described with reference to Fig. 3 through Fig. 7 in addition to Fig. 1 and Fig. 2.

Fig. 3 is a flow chart of "vehicle seat detecting process" for detecting information of a driver's seat (vehicle seat) in the vehicle seat detecting system 100 of this embodiment. In this embodiment, the "vehicle seat detecting process" is carried out by the photographing means 110 (the camera 112) and the control means 120 as shown in Fig. 1.

In the "vehicle seat detecting process" of this embodiment, image is taken by the camera 112 such that a driver's seat (the driver's seat 12 in Fig. 2) and a vehicle occupant (the vehicle occupant C in Fig. 2) are positioned at the center of the image. At step S 102 in Fig. 3, at least the three-dimensional surface profile of the driver's seat 12 as the object is detected based on the image obtained by the camera 112. The photographing means 110 including the camera 112 is structured as a means for detecting a three-dimensional surface profile of the driver's seat as a vehicle seat from a single view point. Since the object to be detected by the camera 112 of this embodiment includes at least the vehicle seat, a vehicle occupant or an article occupying the vehicle seat can be also detected together with the detection of the vehicle seat. The "single view point" used here means a style where the number of installation places of the camera is one, that is, a single camera is mounted at a single place. As the camera 112 capable of taking images from a single view point, a 3-D type monocular C-MOS camera or a 3-D type pantoscopic stereo camera may be employed.

In this embodiment, a 3D-type camera capable of detecting 3D (three-dimensional) images using "time-of-flight (TOF) technique" is used as the camera 112. The time-of-flight technique is a method in which distance from an object is measured according to the time delay between reflection of light on the object and detection of the light by the camera and is known as a technique capable of detecting a three-dimensional surface profile of the object by measuring distances from a plurality of points on the three-dimensional surface profile of the object. As the technique, a time-of-flight style in which ultrasonic wave or light is used to measure time between emission and return thereof and a phase-detection style in which light having amplitude modulated into sinusoidal waveform is used to detect phase lag according to the distance from an object may be used.

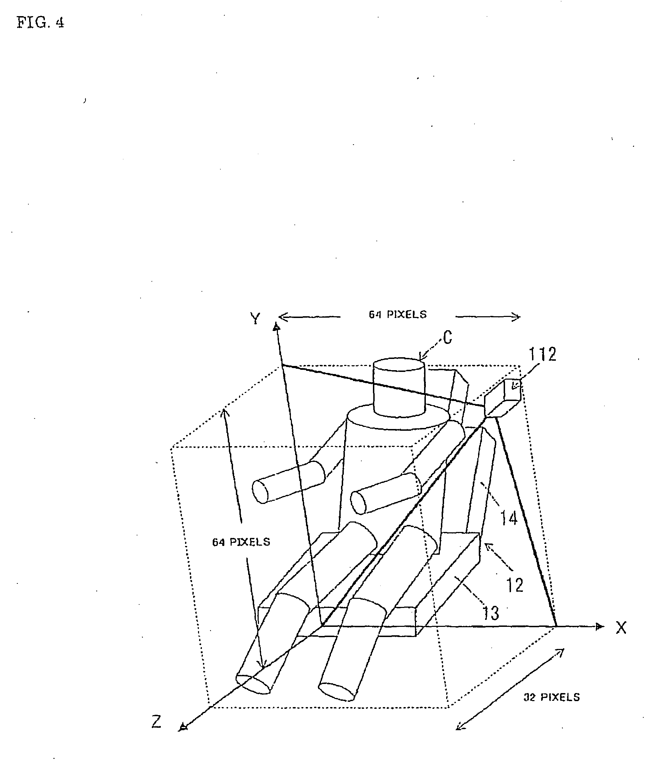

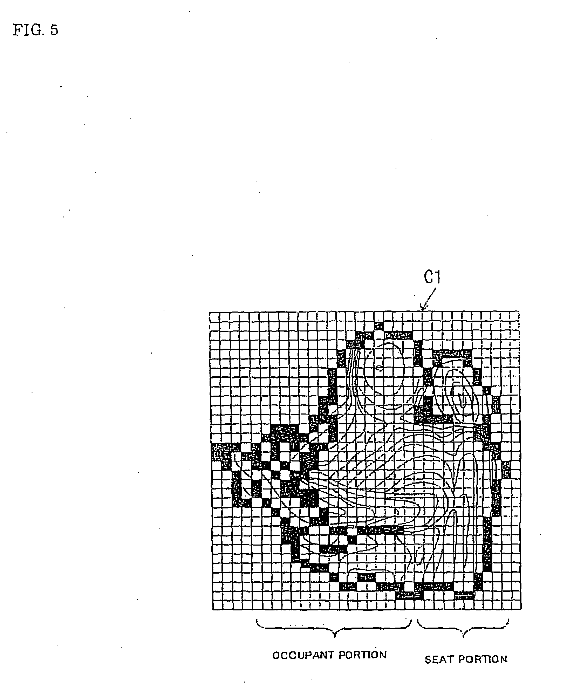

At step S 103 in Fig. 3, a segmentation process is conducted to segment a dot image of the three-dimensional surface profile obtained at step S102 into a large number of pixels. In the segmentation process, the dot image of the three-dimensional surface profile is segmented into three-dimensional lattices (X64) × (Y64) × (Z32). An aspect of pixel segmentation in this embodiment is shown in Fig. 4. As shown in Fig. 4, the center of a plane to be photographed by the camera is set as an origin, an X axis is set as lateral, a Y axis is set as vertical, and a Z axis is set as anteroposterior. With respect to the dot image of the three-dimensional surface profile, a certain range of the X axis and a certain range of the Y axis are segmented into respective 64 pixels, and a certain range of the Z axis is segmented into 32 pixels. It should be noted that, if a plurality of dots are superposed on the same pixel, an average is employed. According to the process, a segmentation-processed image C1 of the three-dimensional surface profile as shown in Fig. 5 is obtained for example. Fig. 5 is an illustration showing a segmentation-processed image C1 of this embodiment. The segmentation-processed image C1 corresponds to a perspective view of the vehicle occupant C taken from the camera 112 and shows a coordinate system about the camera 112. In this manner, the three-dimensional surface profile detected by the camera 112 is digitized into a numerical coordinate system, thereby obtaining the segmentation-processed image C1.

At step S 104 in Fig. 3, a process for detecting the position and the inclination of the seat back shoulder region of the seat back (the seat back 14 shown in Fig. 4) of the driver's seat 12 is conducted using the segmentation-processed image C1 obtained at step S103. The "seat back shoulder region" used here is defined as a region about a shoulder of the seat back, i.e. including a portion extending from a side edge to an upper edge and peripheral portions thereof. This detection process is carried out by the seat back inclination detecting section 174 shown in Fig. 1. As for the information about the position and the inclination of the seat back shoulder region of the seat back, it does not necessarily require both information because one of the information can be estimated from fragmentary information or predetermined values can be used instead of detecting one of the information.

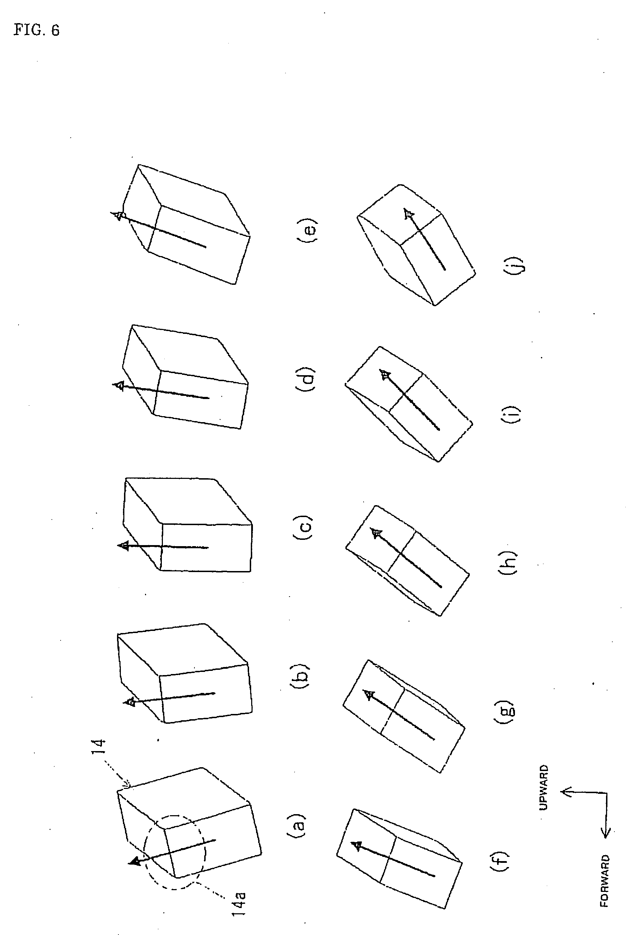

Specifically, an image of the seat back shoulder region 14a of the driver's seat 12 actually detected by the camera 112 is compared to a plurality of configurations of the seat back shoulder region previously stored in the storing section 152 of the storing means 150 so as to retrieve a configuration which is coincident with or the nearest to the actually detected configuration, i.e. "pattern matching" is conducted. Fig. 6 shows some examples of the plurality of configurations of the seat back shoulder region which are previously stored in the storing section 152 of the storing means 150 of this embodiment. In Fig. 6, ten examples (a) through (j) of the configuration of the seat back shoulder region 14a of the driver's seat 12 are illustrated in which each configuration represents a different inclination angle of the seat back 14 shifted from the next one by a predetermined angle. Each arrow in Fig. 6 indicates the direction of the seat back 14 (the seat back shoulder region 14a). A configuration (c) in Fig. 6 indicates a state that the seat back shoulder region 14a stands almost vertically. Configurations (a) and (b) indicate states that the seat back shoulder region 14a is inclined forward from the configuration (c). Configurations (d) through (j) indicate state that the seat back shoulder region 14a is inclined backward from the configuration (c).

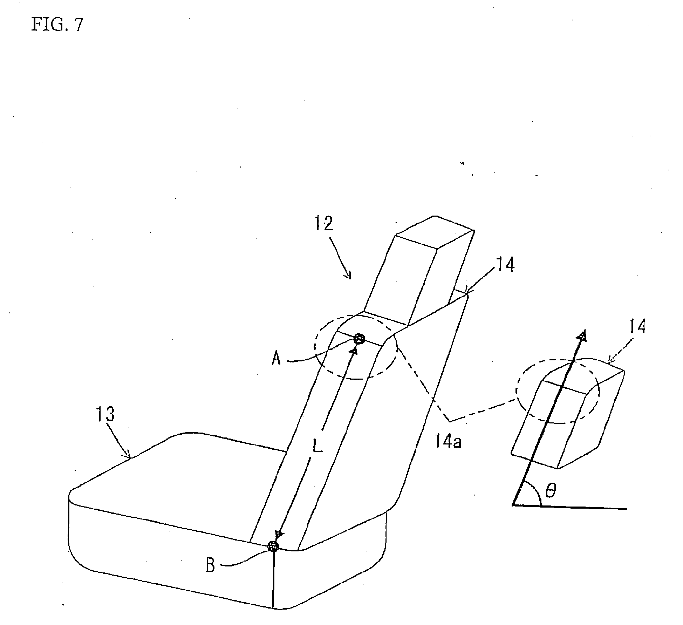

Among the plurality of configurations previously stored in the storing section 152 of the storing means 150, one configuration of which degree of matching (matching percentage) with the image of the seat back shoulder region 14a actually detected is highest is selected. From the inclination angle and the position of the selected configuration, the inclination angle and the position of the seat back shoulder region 14a are derived. An inclination angle θ of the seat back 14 and a center position A of the seat back shoulder region 14a of this embodiment are shown in Fig. 7. The inclination angle θ of the seat back 14 coincides with the inclination angle of the seat back shoulder region 14a.

This process corresponds to a process of "deriving information, mostly matching the information detected by the three-dimensional surface profile detecting means, as the information about the seat back shoulder region from the plural kinds of positional information previously stored in the storing means" of the present invention.

The movements of the driver's seat 12 include the anteroposterior sliding movement and the adjustment of the inclination angle of the seat back are adjustable. Even with combination of these two kinds of movement, the movement range of the seat back shoulder region 14a is limited. The nearer to a vehicle top (ceiling panel) the seat back shoulder region 14a is, the more vertical the seat back 14 stands. On the other hand, the nearer to a vehicle bottom (floor) the seat back shoulder region 14a is, the more horizontal the seat back 14 lies. That is, there is a limitation as mentioned above. Taking such information into account, efficient pattern matching is achieved.

At step S105 in Fig. 3, a process for detecting the height (seating level) of the seat cushion 13 and the anteroposterior position of the driver's seat 12 is conducted. The detection process is carried out by the seat cushion height detecting section 172 and the seat anteroposterior position detecting section 176 shown in Fig. 1.

For this process, the length L of the seat back 14 as shown in Fig. 7 is previously stored in the storing section 152 of the storing means 150. As shown in Fig. 7, the length L is a distance between the center position A of the seat back shoulder region 14a and a reference position B of the seat cushion 13. Therefore, the height (seating level) of the seat cushion 13 and the anteroposterior position of the seat can be calculated from the angle θ and the center position A of the seat back 14 actually derived at step S104. That is, the position downwardly apart from the center position A at the angle θ by the distance L is the top (level) of the seat cushion 13 and the rearmost end (the rearmost portion) of the seat in the anteroposterior direction.

This process corresponds to a process "for determining the positional condition of the vehicle seat based on the derived information about the seat back shoulder region" of the present invention.

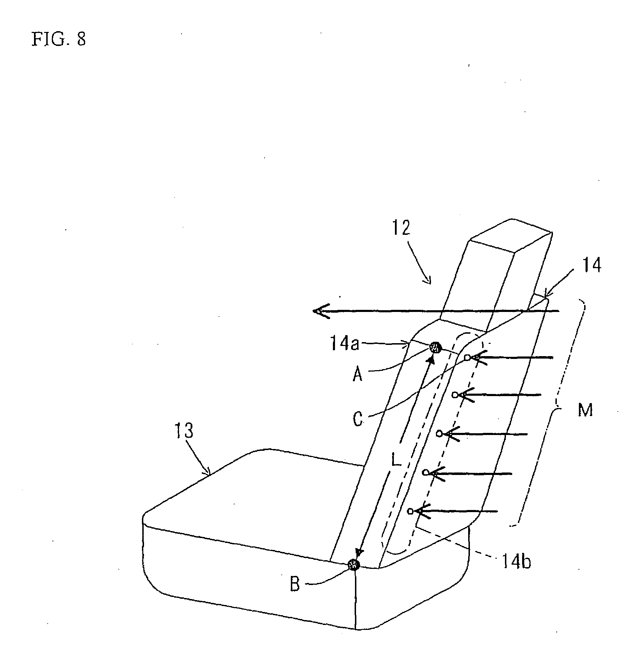

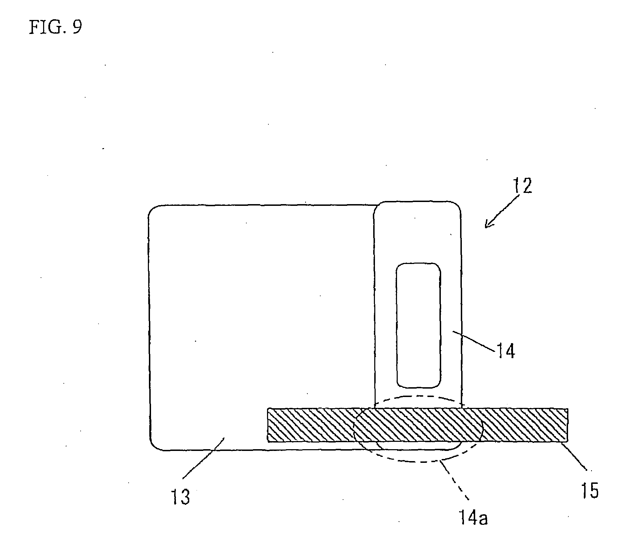

Also in this embodiment, the inclination angle of the seat back 14, the height (seating level) of the seat cushion 13, and the anteroposterior position of the seat can be derived in a method other than the aforementioned "pattern matching". Hereinafter, another deriving method for deriving information about the vehicle seat will be described with reference to Fig. 8 and Fig. 9. Fig. 8 shows a case that a back side of a seat back side edge 14b is scanned at a plurality of points along the vertical direction by a plurality of scanning beams M from the rear to the front of the vehicle according to the segmentation-processed image C1 obtained at step S103 for the vehicle seat detecting process of this embodiment. Fig. 9 is an illustration, taken from above the driver's seat 12, showing a scanning range 15 using the scanning beams M.

As shown in Fig. 8 and Fig. 9, the back side of the seat back side edge 14b is scanned at a plurality of points along the vertical direction by a plurality of scanning beams M from behind the driver's seat 12 toward the front of the driver's seat 12 so as to detect one point at which the configuration is first detected. In the example shown in Fig. 8, there are five points detected by the scanning beams M. The "seat back side edge 14b" is defined as a portion along the edge of the side of the seat back 14. In case of scanning the back side of the seat back side edge 14b in the vertical direction, only the back of the seat back 14 is continuously detected without detecting the head rest. In this case, it can be determined that the uppermost detected point C which is positioned at the top among the detected points corresponds to a position on the back of the seat back shoulder region 14a.

That is, since the scanning range 15 shown in Fig. 9 is a range where the scanning beams are interfered by the seat back 14 and are not interfered by the head rest, the upper most detected point C detected in the scanning range 15 corresponds to the seat back shoulder region 14a as the upper end of the seat back 14. When the thickness d of the seat back 14 is previously stored, the position apart from the detected point C by (d/2) in a direction toward the front of the vehicle is defined as the center position A of the seat back shoulder region 14a. In addition, the inclination angle θ of the seat back 14 (the seat back shoulder region 14a) can be derived by obtaining the angle of a line connecting the plurality of detected points.

This process corresponds to a process "of scanning a plurality of points along a vertical direction on the back side of a seat back side edge by scanning beams from the rear to the front of the vehicle and deriving information about the seat back shoulder region, based on the information about the plurality of points of the seat back side edge detected by the scanning" of the present invention.

Further, the height (seating level) of the seat cushion 13 and the anteroposterior position of the seat can be detected in the same manner as that at step S105 of the aforementioned "pattern matching".

Then, based on the detected information about the inclination angle of the seat back 14, the height (seating level) of the seat cushion 13, and the anteroposterior position of the seat detected by the vehicle seat detecting system 100 having the aforementioned structure, the operation device 210 is actuated. Specifically, an arrangement for informing of the information about the vehicle seat itself, an arrangement for producing an alarm indicating that the positional condition of the vehicle seat is out of the standard range according to the detected information, an arrangement for determining the position, the body size, and movement of the vehicle occupant from the detected information and then changing the mode of occupant restraint by an airbag and/or a seat belt according to the information of the determination may be employed.

As mentioned above, the vehicle seat detecting system 100 of this embodiment is structured to determine the positional conditions of the driver seat 12 by detecting the position and the inclination angle of the seat back shoulder region 14a among respective regions of the driver's seat 12. Since a front surface of a vehicle seat is covered by a vehicle occupant sitting in the seat, it is difficult to precisely detect the whole vehicle seat using a photographing means such as a camera. Then, the inventors focused attention on the seat back shoulder region 14a which is closely related to the positional conditions of the whole driver's seat 12. Consequently in this embodiment, the vehicle seat detecting system is structured to detect the position and the inclination angle of the seat back shoulder region 14a in order to detect the positional conditions of the driver's seat 12. That is, the position and the inclination angle of the seat back shoulder region 14a can be used as reference for obtaining the position and the inclination angle of the whole seat back 14. By using the seat back shoulder region 14a as reference, the position of the seat back, the anteroposterior position of the seat, and the height of the seat cushion can be obtained. In addition, among respective regions of the seat back 14, especially the seat back shoulder region 14a is allowed to be detected easily by the camera 112 without being disturbed by the vehicle occupant in view of the position. When at least information about (position, inclination angle etc.) the seat back shoulder region 14a as a region of the driver's seat 12 is derived, the positional conditions of the vehicle seat such as the inclination angle of the seat back, the anteroposterior position of the seat, and the height of the seat cushion of the driver's seat 12 can be precisely determined even though the whole driver's seat 12 is not detected.

### Another embodiment

The present invention is not limited to the aforementioned embodiment and various applications and modifications may be made. For example, the following respective embodiments based on the aforementioned embodiment may be carried out.

Though the aforementioned embodiment has been described with regard to a case that the computing means 170 as a processing means has both a function of deriving information about the seat back shoulder region 14a among respective regions of the driver's seat 12 and a function of determining the positional conditions of the driver's seat 12, the processing means of the present invention may have at least a function of deriving information about a seat back shoulder region among respective regions of a vehicle seat.

Though the aforementioned embodiment has been described with regard to a case that the driver seat 12 is the object to be detected by the camera 112, in this invention the object to be detected by the camera 112 may be a front passenger seat or a rear seat other than the driver's seat 12. In this case, the camera as the photographing means (the three-dimensional surface profile detecting means) may be suitably installed in various vehicle body components such as an instrument panel positioned in an anterior portion of an automobile body, a pillar, a door, a windshield, and a seat, according to need.

Though the aforementioned embodiment has been described with regard to the arrangement of the vehicle seat detecting system 100 to be installed in an automobile, the present invention can be adopted to object detecting systems to be installed in various vehicles other than automobile such as an airplane, a boat, a bus, a train, and the like.

## Claims

1. A vehicle seat detecting system comprising:
a three-dimensional surface profile detecting means (110) for detecting a three-dimensional surface profile of a vehicle seat (12) from a single view point;
a digitizing means (130) for digitizing the three-dimensional surface profile detected by the three-dimensional surface profile detecting means into a numerical coordinate system; and
a processing means (170) for conducting a process for deriving information about a seat back shoulder region (14a) among respective regions of the vehicle seat (12) based on the numerical coordinate system of the three-dimensional surface profile digitized by the digitizing means (130),
**characterized by**
a storing means (150) for storing plural kinds of positional information of the seat back shoulder region (14a), wherein
the processing means (170) derives information, mostly matching the information detected by the three-dimensional surface profile detecting means (110), as the information (θ, A) about the seat back shoulder region (14a) from the plural kinds of positional information previously stored in the storing means (150).

2. A vehicle seat detecting system as claimed in claim 1, wherein
in the numerical coordinate system of the three-dimensional surface profile digitized by the digitizing means (130), the processing means (170) scans a plurality of points along a vertical direction on the back side of a seat back side edge (14b) by scanning beams (M) from the rear to the front of the vehicle and derives information (θ, A) about the seat back shoulder region (14a) based on the information about the plurality of points of the seat back side edge (14b) detected by the scanning.

3. A vehicle seat detecting system as claimed in claim 1 or 2, wherein
the processing means (170) conducts a process for determining the positional condition of the vehicle seat (12) based on the derived information about the seat back shoulder region (14a).

4. An operation device controlling system comprising:
a vehicle seat detecting system (100) as claimed in any one of claims 1 through 3;
an operation device (210) which is actuated based on the positional condition of the vehicle seat (12) determined by the processing means (170) of the vehicle seat detecting system (100); and
an actuation control means (200) for controlling the actuation of the operation device (210).

5. A vehicle comprising an engine/running system; an electrical system; an actuation control device (200) for conducting the actuation control of the engine/running system and the electrical system; and a vehicle seat detecting means for detecting positional condition of a vehicle seat (12), wherein
the vehicle seat detecting means comprises a vehicle seat detecting system (100) as claimed in any one of claims 1 through 3.

## Patentansprüche

1. System zur Beobachtung eines Fahrzeugsitzes, umfassend:
Mittel zur Erfassung eines dreidimensionalen Oberflächenprofils (110), um von einem einzigen Blickpunkt ein dreidimensionales Oberflächenprofil eines Fahrzeugsitzes (12) zu erfassen;
Digitalisierungsmittel (130), um das dreidimensionale Oberflächenprofil, welches durch die Mittel zur Erfassung eines dreidimensionalen Oberflächenprofils erfasst worden ist, in ein numerisches Koordinatensystem zu digitalisieren; und
Bearbeitungsmittel (170), um ein Verfahren auszuführen, um Informationen über einen Schulterbereich (14a) einer Rückenlehne unter entsprechenden Bereichen des Fahrzeugsitzes (12) abhängig von dem numerischen Koordinatensystem des dreidimensionalen Oberflächenprofils, welches durch die Digitalisierungsmittel (130) digitalisiert worden ist, abzuleiten,
**gekennzeichnet durch**
Speichermittel (150), um mehrere Arten einer Positionsinformation des Schulterbereichs (14a) der Rückenlehne zu speichern,
wobei die Bearbeitungsmittel (170) Informationen, welche hauptsächlich mit den Informationen übereinstimmen, die **durch** die Mittel (110) zur Erfassung des dreidimensionalen Oberflächenprofils erfasst worden sind, als die Informationen (θ, A) über den Schulterbereich (14a) der Rückenlehne von den mehreren Arten der vorher in den Speichermittel (150) gespeicherten Positionsinformationen ableiten.

2. System zur Beobachtung eines Fahrzeugsitzes nach Anspruch 1,
**dadurch gekennzeichnet,**
**dass** in dem numerischen Koordinatensystem des dreidimensionalen Oberflächenprofils, welches durch die Digitalisierungsmittel (130) digitalisiert worden ist, die Bearbeitungsmittel (170) mehrere Punkte entlang einer vertikalen Richtung auf der Rückseite einer seitlichen Kante (14b) der Rückenlehne durch Abtaststrahlen (M) von der Rückseite des Fahrzeugs zu der Vorderseite des Fahrzeugs abtasten und die Informationen (θ, A) über den Schulterbereich (14a) der Rückenlehne abhängig von den Informationen über die mehreren Punkte der seitlichen Kante (14b) der Rückenlehne, welche durch das Abtasten erfasst worden sind, ableiten.

3. System zur Beobachtung eines Fahrzeugsitzes nach Anspruch 1 oder 2,
**dadurch gekennzeichnet,**
**dass** die Bearbeitungsmittel (170) ein Verfahren zur Bestimmung des Positionszustandes des Fahrzeugsitzes (12) abhängig von den abgeleiteten Informationen über den Schulterbereich (14a) der Rückenlehne durchführen.

4. System zur Steuerung einer Betriebsvorrichtung, umfassend:
ein System (100) zur Beobachtung eines Fahrzeugsitzes nach einem der Ansprüche 1 bis 3;
eine Betriebsvorrichtung (210), welche abhängig von dem Positionszustand des Fahrzeugsitzes (12), welcher durch die Bearbeitungsmittel (170) des Systems (100) zur Beobachtung des Fahrzeugsitzes bestimmt worden ist, betätigt wird; und Mittel (200) zur Steuerung einer Betätigung, um die Betätigung der Betriebsvorrichtung (210) zu steuern.

5. Fahrzeug umfassend ein Motor-/Fahr-System; ein elektrisches System; eine Vorrichtung (200) zur Steuerung einer Betätigung, um die Steuerung einer Betätigung des Motor-/Fahr-Systems und des elektrischen Systems durchzuführen; und Mittel zur Beobachtung eines Fahrzeugsitzes, um einen Positionszustand eines Fahrzeugsitzes (12) zu erfassen, wobei die Mittel zur Beobachtung des Fahrzeugsitzes ein System (100) zur Beobachtung eines Fahrzeugsitzes nach einem der Ansprüche 1 bis 3 umfassen.

## Revendications

1. Système de détection de siège de véhicule comprenant :
un moyen de détection de profil de surface en trois dimensions (110) pour détecter un profil de surface en trois dimensions d'un siège de véhicule (12) selon un seul point de vue ;
un moyen de numérisation (130) pour numériser le profil de surface en trois dimensions détecté par le moyen de détection de profil de surface en trois dimensions dans un système de coordonnées numérique ; et
un moyen de traitement (170) pour piloter un procédé pour dériver des informations relatives à une zone d'appui d'une épaule sur un dossier (14a) entre des zones respectives du siège de véhicule (12) basé sur le système de coordonnées numérique du profile de surface en trois dimensions numérisé par le moyen de numérisation (130),
**caractérisé par**
un moyen de stockage (150) pour stocker plusieurs types d'informations de position de la zone d'appui d'une épaule sur un dossier (14a), dans lequel
le moyen de traitement (170) dérive des informations, principalement en fonction des informations détectées par le moyen de détection de profile de surface en trois dimensions (110), comme les informations (θ, A) relatives à la zone d'appui d'une épaule sur un dossier (14a) provenant de plusieurs types d'informations de position préalablement stockées dans le moyen de stockage (150).

2. Système de détection de siège de véhicule selon la revendication 1, dans lequel, dans le système de coordonnées numérique du profile de surface en trois dimensions numérisé par le moyen de numérisation (130), le moyen de traitement (170) balaye une pluralité de points le long d'une direction verticale sur la face arrière d'un bord latéral du dossier (14b) en balayant des faisceaux (M) de l'arrière vers l'avant du véhicule et tire des informations (θ, A) relatives à la zone d'appui d'une épaule sur le dossier (14a) basées sur les informations relatives à la pluralité de points du bord latéral du dossier (14b) détectées par le balayage.

3. Système de détection de siège de véhicule selon la revendication 1 ou 2 , dans lequel le moyen de traitement (170) pilote un procédé pour déterminer l'état de positionnement du siège du véhicule (12) basé sur les informations dérivées relatives à une zone (14a) d'appui d'une épaule sur le dossier.

4. Un système de commande d'un dispositif fonctionnel comprenant :
un système de détection de siège de véhicule (100) selon l'une quelconque des revendications 1 à 3 ;
un dispositif fonctionnel (210) qui est actionné en fonction de l'état de positionnement du siège du véhicule (12) déterminé par un moyen de traitement (170) du système de détection de siège de véhicule (100) ; et
un moyen de commande d'actionneur (200) pour commander l'actionnement du dispositif fonctionnel (210).

5. Un véhicule comprenant un système moteur et d'entraînement; un système électrique ; un dispositif de commande d'actionnement (200) pour piloter la commande d'actionnement du système moteur et d'entraînement et le système électrique ; et des moyens de détection du siège de véhicule pour détecter l'état de positionnement du siège de véhicule (12), dans lequel les moyens de détection du siège de véhicule comprend un système de détection de siège de véhicule (100) selon l'une quelconque des revendications 1 à 3.
